# EUROPEAN PATENT SPECIFICATION

(11) **EP 1 479 072 B1**
(45) Date of publication and mention of the grant of the patent: **31.05.2006**
(21) Application number: 03702905.5
(22) Date of filing: 21.02.2003
(51) Int. Cl.: G11B 7/00

(54) **METHODS AND DEVICES FOR RECORDING MARKS ON A RECORDING SURFACE OF AN OPTICAL RECORD CARRIER AND OPTICAL RECORD CARRIERS THEREFOR**
VERFAHREN UND VORRICHTUNGEN ZUR AUFZEICHNUNG VON MARKIERUNGEN AUF EINE AUFZEICHNUNGSFLÄCHE EINES OPTISCHEN AUFZEICHNUNGSTRÄGERS, UND OPTISCHE AUFZEICHNUNGSTRÄGERN DAFÜR
PROCEDES ET DISPOSITIFS SERVANT A ENREGISTRER DES REPERES SUR LA SURFACE D'ENREGISTREMENT D'UN SUPPORT D'ENREGISTREMENT OPTIQUE ET SUPPORTS D'ENREGISTREMENT OPTIQUE CORRESPONDANTS

(30) Priority: 22.02.2002 EP 02075728
(43) Date of publication of application: 24.11.2004
(73) Proprietor: Koninklijke Philips Electronics N.V., 5621 BA Eindhoven (NL)
(72) Inventor: MARTENS, Hubert, C., F., NL-5656 AA Eindhoven (NL)
(74) Representative: Uittenbogaard, Frank
(86) International application number: PCT/IB2003/000620
(87) International publication number: WO 2003/071524

(56) References cited:
- EP-A- 1 026 669
- EP-A- 1 098 305
- EP-A- 1 174 862
- WO-A-01/86643
- US-A- 5 732 062
- US-B1- 6 280 810

## Description

The invention relates to an optical record carrier recording method for forming marks and lands by applying a radiation beam to a recording surface of an optical record carrier, the marks having a time length of nT, where T represents the time length of one period of a reference clock in a data signal and n represents a predetermined natural number, where the radiation beam for each mark to be recorded is first set to a intermediate power irradiation level, the intermediate power irradiation level being higher than bottom power irradiation level and lower than write power irradiation level, where the intermediate power irradiation level is set in accordance with a time length of the preceding bottom power irradiation period.

The invention also relates to an optical record carrier recording method for forming marks and lands by applying a radiation beam to a recording surface of an optical record carrier, the marks having a time length of nT, where T represents the time length of one period of a reference clock in a data signal and n represents a predetermined natural number smaller than 3, where the radiation beam for each mark to be recorded is first set to a intermediate power irradiation level, the intermediate power irradiation level being higher than bottom power irradiation level and lower than write power irradiation level, where the intermediate power irradiation level is set in accordance with a time length of the preceding bottom power irradiation period.

The invention also relates to optical recording devices for carrying out such methods.

The invention also relates to optical carriers capable of having such methods applied to them.

A recording method of the kind set in the preamble is known from a patent application WO 01/86643. In a solution presented in the patent application a mark is formed by applying a radiation beam to a recording surface of an optical record carrier set to have an intermediate power level after the bottom power level and before the write power level. Furthermore, a mark is formed by applying a radiation beam having write power level and elevated power level to a recording surface of an optical record carrier in the first and the second portion of the write power irradiation period respectively. The preferred elevated power level is set to be within the range from 1.05 to 1.15 times the write power level and from 1.00 to 1.08 times the write power level for marks to be recorded having a time length of 3T and 4T respectively. The recording method allows to reduce a jitter and is especially applicable to CD-R systems.

It is an object of an invention to provide a method of recording marks of the kind described in the opening paragraph which is better suitable to DVR-R (BD-R) format.

This object is achieved by a method as described in the preamble which is characterized in that after the intermediate power irradiation period, the radiation beam for each mark to be recorded is set to the write power irradiation level during a first and a third portions of a write irradiation period. Whereas the radiation beam for each mark to be recorded is set to an elevated write power level during a second portion of the write irradiation period. The elevated write power level is higher than the write power level. Both the elevated write power level and the duration of the second portion of the write irradiation period are being set in accordance with a time length of a mark to be recorded.

This object is also achieved by a method as described in the preamble which is characterized in that after the intermediate power irradiation period, the radiation beam for each mark to be recorded is set to an elevated write power irradiation level during a first portion of a write irradiation period. Whereas the radiation beam for each mark to be recorded is set to the write power level during a second portion of the write irradiation period. The elevated write power level is higher than the write power level. Both the elevated write power level and the duration of the first portion of the write irradiation period are being set in accordance with a time length of the mark to be recorded.

A preferred version of the method according to the invention is characterized in that where n equals 2 the elevated write power level is set to be lower than 2.0 times the write power level. Where n equals 3, the elevated write power level is set to be lower than 1.7 times the write power level; where n equals 4, the elevated write power level is set to be lower than 1.5 times the write power level; and where n is larger than 4, the elevated write power level is set to be lower than 1.4 times the write power level.

Another feature characterizing a preferred version of the method according to the invention is that where the duration of the length of a preceding bottom power irradiation period is smaller than 2T, the intermediate power irradiation level is set to be lower than 0.5 times the write power level. The duration of the length of a preceding bottom power irradiation period is equal to 3T, the intermediate power irradiation level is set to be within the range from 0.3 to 0.8 times the write power level; where the duration of the length of a preceding bottom power irradiation period is equal to 4T, the intermediate power irradiation level is set to be within the range from 0.4 to 0.9 times the write power level; and where the duration of the length of a preceding bottom power irradiation period is greater than 4T, the intermediate power irradiation level is set to be greater than 0.5 times the write power level.

This object of an invention is also achieved by a method as described in the preamble for marks having a time length of nT, where T represents the time length of one period of a reference clock in a data signal and n represents a predetermined natural number smaller than 3, which is characterized in that after the intermediate power irradiation period the radiation beam for each mark to be recorded is set to the write power irradiation level during a first portion of a write irradiation period. Whereas the radiation beam for each mark to be recorded is set to an elevated write power level during a second portion of the write irradiation period and where the elevated write power level is higher than the write power level.

It is a further object of the invention to provide an optical recording device for carrying out the methods according to the invention. This object is achieved by optical recording devices which have features as described in claim 14 or claim 15 or claim 16.

It is a further object of the invention to provide an optical record carrier where the parameters for carrying out the methods according to the invention are pre-recorded in the appropriate part of the optical record carrier. This object is achieved by optical recording devices which have features as described in claim 17.

Although the invention is explained by using a DVR-R (BD-R) system as an example, it will be apparent to those skilled in the art that the invention may be applied to alternative optical recording systems.

The objects, features and advantages of the invention will be apparent from the following, more specific description of embodiments of the invention as illustrated in the accompanying drawings, wherein:
Fig. 1 shows a diagram of a first version of a method according to the invention,
Fig. 2 shows a diagram of a second version of a method according to the invention,
Fig. 3 shows a diagram of another method not falling under the scope of the present invention , and
Fig. 4 shows a diagram of an optical recording device according to the invention.

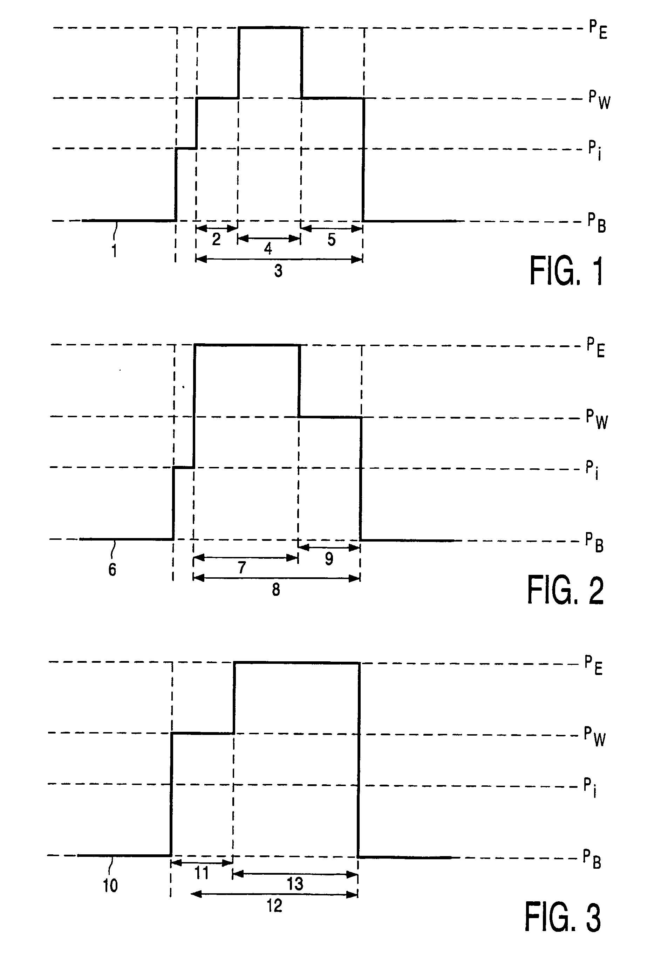

Fig. 1 shows a control signal 1 for controlling the power of the radiation beam. When a mark is recorded, the control signal 1, and hence the power of the radiation beam, is first set from bottom power level P_{B} to intermediate power level Pᵢ and then is set to the write power P_{w} during the first portion 2 of the write irradiation period 3 and subsequently it is set to the elevated write power level P_{E} during the second portion 4 of the write irradiation period 3. Afterwards, the control signal 1, and hence the power of the radiation beam, is set again to the write power P_{w} during the third portion 5 of the write irradiation period 3 and then it is set to bottom power level P_{B}.

Fig. 2 shows a control signal 6 for controlling the power of the radiation beam. When a mark is recorded, the control signal 6, and hence the power of the radiation beam, is first set from bottom power level P_{B} to intermediate power level Pᵢ and then is set to the elevated write power P_{E} during the first portion 7 of the write irradiation period 8. Afterwards, the control signal 6, and hence the power of the radiation beam, is set to the write power P_{W} during the second portion 9 of the write irradiation period 8 and then it is set to bottom power level P_{B}.

Fig. 3 shows a control signal 10 for controlling the power of the radiation beam. When a mark is recorded, the control signal 10, and hence the power of the radiation beam, is first set from bottom power level P_{B} to the write power P_{W} during the first portion 11 of the write irradiation period 12. Afterwards, the control signal 10, and hence the power of the radiation beam, is set to the elevated write power P_{E} during the second portion 13 of the write irradiation period 12 and then it is set to bottom power level P_{B}.

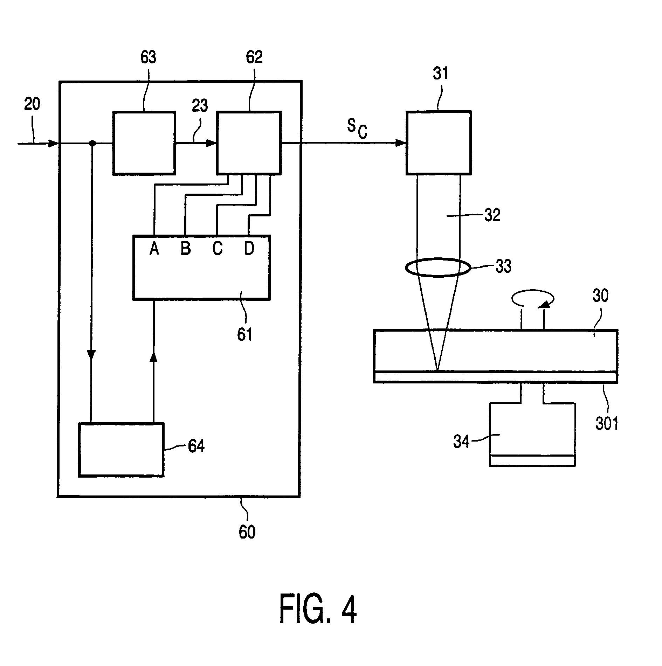

Fig. 4 shows an optical recording device according to the invention for recording a data signal 20 on the recording surface 301 of a disc-shaped optical record carrier. The optical record carrier is rotated around its center by a motor 34. A radiation beam 32 is generated by a radiation source 31 and focused onto the recording surface 301 by a lens 33.

The data signal 20 is connected to control means 60. A current source 61 within the control means 60 has four outputs, A, B, C and D. Output A provides a current which, when fed to the radiation source 31 through a control signal S_{C}, will produce the radiation beam 32 having a write power level P_{w}. Likewise, outputs B, C and D provide currents resulting in the elevated write power level P_{E}, the bottom power level P_{B} and the intermediate power level Pᵢ, respectively. The current of each output A, B, C and D can be selected by a switch-unit 62 within the control means 60. The switch-unit 6 2 is operated by a pattern generator 63 controlled by the data signal 20. The pattern generator 63 transforms the data signal 20 into a control signal 23.

The control means 60 also comprise setting means 64 for setting the current of the outputs B and D of the current source 61. The current of output B of the current source 61 is set in dependence on the length of the duration of elevated power level periods. Thus, by setting the current of output B, the elevated write power level is set in dependence on the length of the mark to be recorded. The current of output D of the current source 61 is set in dependence on duration of the bottom power period preceding the write power period, thus, by setting the current of output D, the intermediate power level is set in dependence on the length of the land preceding the mark to be recorded.

Fig.4 shows an embodiment of an optical recording device according to the invention. However, it will be apparent to those skilled in the art that embodiments of an optical recording device using more power levels can be realized by adding further outputs to the current source 61 and by extending the switch-unit 62. Moreover, it will be apparent that a single output B, respectively D, of the current source 61 providing a varying current can, as an alternative, be replaced by several outputs, each providing a different current, while the setting means 64 select the appropriate output for setting the elevated write power level and the intermediate power level, respectively, at any time.

## Claims

1. An optical record carrier recording method for forming marks and lands by applying a radiation beam to a recording surface of an optical record carrier, the marks having a time length of nT,
where T represents the time length of one period of a reference clock in a data signal and n represents a predetermined natural number, where the radiation beam for each mark to be recorded is first set to an intermediate power irradiation level, the intermediate power irradiation level being higher than a bottom power irradiation level and lower than a write power irradiation level,
where the intermediate power irradiation level is set in accordance with a time length of the preceding bottom power irradiation period, **characterized in that**
- after the intermediate power irradiation period, the radiation beam for each mark to be recorded is set to the write power irradiation level during a first and a third portions of a write irradiation period,
- whereas the radiation beam for each mark to be recorded is set to an elevated write power level during a second portion of the write irradiation period,
- where the elevated write power level is higher than the write power level, and
- where both the elevated write power level and the duration of the second portion of write irradiation period are being set in accordance with a time length of a mark to be recorded.

2. An optical record carrier recording method for forming marks and lands by applying a radiation beam to a recording surface of an optical record carrier, the marks having a time length of nT,
where T represents the time length of one period of a reference clock in a data signal and n represents a predetermined natural number,
where the radiation beam for each mark to be recorded is first set to an intermediate power irradiation level, the intermediate power irradiation level being higher than a bottom power irradiation level and lower than a write power irradiation level,
where the intermediate power irradiation level is set in accordance with a time length of the preceding bottom power irradiation period, **characterized in that**
- after the intermediate power irradiation period, the radiation beam for each mark to be recorded is set to an elevated write power irradiation level during a first portion of a write irradiation period,
- whereas the radiation beam for each mark to be recorded is set to the write power level during a second portion of the write irradiation period,
- where the elevated write power level is higher than the write power level, and
- where both the elevated write power level and the duration of the first portion of write irradiation period are being set in accordance with a time length of the mark to be recorded.

3. An optical record carrier recording method as claimed in claim 1 or in claim 2, wherein the elevated write power level for recording a mark having a time length nT is set to be higher than the elevated write power level for recording a mark having a time length(n+1) T.

4. An optical record carrier recording method as claimed in claim 1 or claim 2, where n equals 2, wherein the elevated write power level is set to be lower than 2.0 times the write power level.

5. An optical record carrier recording method as claimed in claim 1 or claim 2, where n equals 3, wherein that the elevated write power level is set to be lower than 1.7 times the write power level.

6. An optical record carrier recording method as claimed in claim 1 or claim 2, where n equals 4, wherein the elevated write power level is set to be lower than 1.5 times the write power level.

7. An optical record carrier recording method as claimed in claim 1 or claim 2, where n is larger than 4, wherein the elevated write power level is set to be lower than 1.4 times the write power level.

8. An optical record carrier recording method as claimed in claim 1, wherein n represents a predetermined natural number smaller than 3 and that the time length of said third portion of said write irradiation period is zero.

9. An optical record carrier recording method as claimed in claim 8, wherein the elevated write power level is set to be lower than 2.0 times the write power level.

10. An optical record carrier recording method as claimed in claim 1 or claim 2 or claim 8, where the duration of the length of a preceding bottom power irradiation period is smaller than 2T, wherein the intermediate power irradiation level is set to be lower than 0.5 times the write power level.

11. An optical record carrier recording method as claimed in claim 1 or claim 2 or claim 8, where the duration of the length of a preceding bottom power irradiation period is equal to 3T, wherein the intermediate power irradiation level is set to be within the range from 0.3 to 0.8 times the write power level.

12. An optical record carrier recording method as claimed claim 1 or claim 2 or claim 8, where the duration of the length of a preceding bottom power irradiation period is equal to 4T, wherein the intermediate power irradiation level is set to be within the range from 0.4 to 0.9 times the write power level.

13. An optical record carrier recording method as claimed in claim 1 or claim 2 or claim 8, where the duration of the length of a preceding bottom power irradiation period is greater than 4T, wherein the intermediate power irradiation level is set to be greater than 0.5 times the write power level.

14. An optical recording device for recording data in the form of marks and lands on a recording surface of an optical record carrier by irradiating the recording surface by means of a radiation beam, the device comprising a radiation source for providing the radiation beam and control means for controlling the power of the radiation beam such as that it has at least one write power level capable of forming a mark during a write power irradiation period and that it has at least one bottom power level incapable of forming a mark during a bottom power irradiation period and that is has at least one intermediate power level being higher than bottom power level and lower than write power level where the control means are operative to set the intermediate power irradiation level in accordance with a time length of the preceding bottom power irradiation period, **characterized in that** the control means are operative to control the power of the radiation beam after the intermediate power irradiation period such that it has
the write power level capable of forming a mark during a first and a third portions of a write irradiation period, and
the elevated write power level capable of forming a mark during a second portion of a write irradiation period,
where the elevated write power level is higher than the write power level, and
where both the elevated write power level and the duration of the second portion of write irradiation period are being set in accordance with a time length of a mark to be recorded.

15. An optical recording device for recording data in the form of marks and lands on a recording surface of an optical record carrier by irradiating the recording surface by means of a radiation beam, the device comprising a radiation source for providing the radiation beam and control means for controlling the power of the radiation beam such as that it has at least one write power level capable of forming a mark during a write power irradiation period and that it has at least one bottom power level incapable of forming a mark during a bottom power irradiation period and that is has at least one intermediate power level being higher than bottom power level and lower than write power level where control means are operative to set the intermediate power irradiation level in accordance with a time length of the preceding bottom power irradiation period, **characterized in that** the control means are operative to control the power of the radiation beam after the intermediate power irradiation period such that it has
the elevated write power level capable of forming a mark during a first portion of a write irradiation period, and
the write power level capable of forming a mark during a second portion of a write irradiation period,
where the elevated write power level is higher than the write power level, and
where both the elevated write power level and the duration of the first portion of write irradiation period are being set in accordance with a time length of a mark to be recorded.

16. An optical recording device according to claim 14, wherein said control means are operative to control the power of the radiation beam such as that it has at least one write power level capable of forming a mark of a length of 2T during said write power irradiation period, where T represents the time length of one period of a reference clock in data, and that the time length of said third portion of said write irradiation period is zero.

17. An optical record carrier for recording data in the form of marks and lands by irradiating its recording surface by means of a radiation beam according to one of the methods as claimed in claims 1 to 13, wherein intermediate power level parameters, elevated write power level parameters and parameters denoting duration of elevated write power level portion of write irradiation period are recorded on the optical record carrier.

## Patentansprüche

1. Aufzeichnungsverfahren für einen optischen Aufzeichnungsträger zum Bilden von Markierungen und Feldern durch Zuführung eines Strahlungsbündels zu einer Aufzeichnungsfläche eines optischen Aufzeichnungsträgers, wobei die Markierungen eine Zeitlänge gleich nT haben,
- wobei T die Zeitlänge einer einzigen Periode eines Bezugstaktes in einem Datensignal darstellt und wobei n eine vorbestimmte natürliche Zahl darstellt, wobei das Strahlungsbündel für jede aufzuzeichnende Markierung zunächst auf einen Strahlungspegel mittlerer Leistung gesetzt wird, wobei der Strahlungspegel mittlerer Leistung höher ist als ein Strahlungspegel mit Schreibleistung,
- wobei der Strahlungspegel mittlerer Leistung entsprechend einer Zeitlänge der vorhergehenden Strahlungsperiode mit geringer Leistung eingestellt wird, **dadurch gekennzeichnet, dass**
- nach der Bestrahlungsperiode mit mittlerer Leistung das Strahlungsbündel für jede aufzuzeichnende Markierung während eines ersten und eines zweiten Teils einer Schreibbestrahlungsperiode auf den Strahlungspegel mit Schreibleistung gesetzt wird,
- während das Strahlungsbündel für jede aufzuzeichnende Markierung während eines zweiten Teils der Schreibbestrahlungsperiode auf einen erhöhten Schreibleistungspegel gesetzt wird,
- wobei der erhöhte Schreibleistungspegel höher ist als der Schreibleistungspegel, und
- wobei der erhöhte Schreibleistungspegel und die Dauer des zweiten Teils der Schreibbestrahlungsperiode entsprechend einer Zeitlänge einer aufzuzeichnenden Markierung eingestellt wird.

2. Aufzeichnungsverfahren für einen optischen Aufzeichnungsträger zum Bilden von Markierungen und Feldern durch Zuführung eines Strahlungsbündels zu einer Aufzeichnungsfläche eines optischen Aufzeichnungsträgers, wobei die Markierungen eine Zeitlänge nT haben,
- wobei T die Zeitlänge einer einzigen Periode eines Bezugstaktes in einem Datensignal darstellt und wobei n eine vorbestimmte natürliche Zahl darstellt,
- wobei das Strahlungsbündel für jede aufzuzeichnende Markierung zunächst auf einen Strahlungspegel mittlerer Leistung gesetzt wird, wobei der Strahlungspegel mittlerer Leistung höher ist als ein Strahlungspegel geringer Leistung und niedriger ist als ein Strahlungspegel mit Schreibleistung,
- wobei der Strahlungspegel mittlerer Leistung entsprechend einer Zeitlänge der vorhergehenden Strahlungsperiode geringer Leistung eingestellt wird, **dadurch gekennzeichnet, dass**
- nach der Bestrahlungsperiode mit mittlerer Leistung das Strahlungsbündel für jede aufzuzeichnende Markierung während eines ersten Teils einer Schreibbestrahlungsperiode auf einen Strahlungspegel mit erhöhter Schreibleistung gesetzt wird,
- während das Strahlungsbündel für jede aufzuzeichnende Markierung während eines zweiten Teils der Schreibbestrahlungsperiode auf den Schreibleistungspegel gesetzt wird,
- wobei der erhöhte Schreibleistungspegel höher ist als der Schreibleistungspegel, und
- wobei der erhöhte Schreibleistungspegel und die Dauer des ersten Teils der Schreibbestrahlungsperiode entsprechend einer Zeitlänge der aufzuzeichnenden Markierung eingestellt wird.

3. Aufzeichnungsverfahren für einen optischen Aufzeichnungsträger nach Anspruch 1 oder nach Anspruch 2, wobei der erhöhte Schreibleistungspegel zum Aufzeichnen einer Markierung mit einer Zeitlänge nT derart eingestellt wird, dass dieser höher ist als der erhöhte Schreibleistungspegel zum Aufzeichnen einer Markierung mit einer Zeitlänge (n+1)T.

4. Aufzeichnungsverfahren für einen optischen Aufzeichnungsträger nach Anspruch 1 oder nach Anspruch 2, wobei n gleich 2 ist, wobei der erhöhte Schreibleistungspegel derart eingestellt wird, dass dieser niedriger ist als der doppelte Schreibleistungspegel.

5. Aufzeichnungsverfahren für einen optischen Aufzeichnungsträger nach Anspruch 1 oder nach Anspruch 2, wobei n gleich 3 ist, wobei der erhöhte Schreibleistungspegel derart eingestellt wird, dass dieser niedriger ist als der 1,7fache Schreibleistungspegel.

6. Aufzeichnungsverfahren für einen optischen Aufzeichnungsträger nach Anspruch I oder nach Anspruch 2, wobei n gleich 4 ist, wobei der erhöhte Schreibleistungspegel derart eingestellt wird, dass dieser niedriger ist als der 1.5fache Schreibleistungspegel.

7. Aufzeichnungsverfahren für einen optischen Aufzeichnungsträger nach Anspruch 1 oder nach Anspruch 2, wobei n größer ist als 4, wobei der erhöhte Schreibleistungspegel derart eingestellt wird, dass dieser niedriger ist als der 1,4fache Schreibleistungspegel.

8. Aufzeichnungsverfahren für einen optischen Aufzeichnungsträger nach Anspruch 1, wobei n eine vorbestimmte natürliche Zahl kleiner als 3 darstellt und wobei die Zeitlänge des genannten dritten Teils der genannten Schreibbestrahlungsperiode Null ist.

9. Aufzeichnungsverfahren für einen optischen Aufzeichnungsträger nach Anspruch 8, wobei der erhöhte Schreibleistungspegel derart eingestellt wird, dass dieser niedriger ist als der doppelte Schreibleistungspegel.

10. Aufzeichnungsverfahren für einen optischen Aufzeichnungsträger nach Anspruch 1 oder nach Anspruch 2 oder nach Anspruch 8, wobei die Dauer der Länge einer vorhergehenden Bestrahlungsperiode geringer Leistung kürzer ist als 2T, wobei der Strahlungspegel mittlerer Leistung derart eingestellt wird, dass dieser niedriger ist als der 0,5 fache Schreibleistungspegel.

11. Aufzeichnungsverfahren für einen optischen Aufzeichnungsträger nach Anspruch 1, nach Anspruch 2 oder nach Anspruch 8, wobei die Dauer der Länge einer vorhergehenden Bestrahlungsperiode geringer Leistung gleich 3T ist, wobei der Strahlungspegel mittlerer Leistung derart eingestellt wird, dass dieser in dem Bereich von 0,3 bis 0,8 mal dem Schreibleistungspegel liegt.

12. Aufzeichnungsverfahren für einen optischen Aufzeichnungsträger nach Anspruch 1, 2 oder 8, wobei die Dauer der Länge einer vorhergehenden Bestrahlungsperiode geringer Leistung gleich 4T ist, wobei der Strahlungspegel mittlerer Leistung derart eingestellt wird, dass dieser innerhalb des Bereichs von 0,4 bis 0,9 mal dem Schreibleistungspegel liegt.

13. Aufzeichnungsverfahren für einen optischen Aufzeichnungsträger nach Anspruch 1, 2 oder 8, wobei die Dauer der Länge einer vorhergehenden Bestrahlungsperiode geringer Leistung länger ist als 4T, wobei der Strahlungspegel mittlerer Leistung derart eingestellt wird, dass dieser höher ist als der 0,5 fache Schreibleistungspegel.

14. Optische Aufzeichnungsanordnung zum Aufzeichnen von Daten in Form von Markierungen und Feldern auf einer Aufzeichnungsfläche eines optischen Aufzeichnungsträgers durch Bestrahlung der Aufzeichnungsfläche mit Hilfe eines Strahlungsbündels, wobei die Anordnung eine Strahlungsquelle aufweist zum Liefern des Strahlungsbündels, und Steuermittel zum Steuern der Leistung des Strahlungsbündels derart, dass dieses Bündel wenigstens einen Schreibleistungspegel hat, der imstande ist, während einer Strahlungsperiode mit Schreibleistung eine Markierung zu bilden und dass es wenigstens einen geringen Leistungspegel hat, der nicht imstande ist, während einer Strahlungsperiode mit geringer Leistung eine Markierung zu bilden und dass es wenigstens einen mittleren Leistungspegel hat, der höher ist als der geringe Leistungspegel und niedrigerer ist als der Schreibleistungspegel, wobei die Steuermittel den Strahlungspegel mittlerer Leistung entsprechend einer Zeitlänge der vorhergehenden Strahlungsperiode geringer Leistung einstellen, **dadurch gekennzeichnet, dass** die Steuermittel die Leistung des Strahlungsbündels nach der Strahlungsperiode mittlerer Leistung derart steuern, dass
- der Schreibleistungspegel imstande ist, während eines ersten und eines zweiten Teils einer Schreibbestrahlungsperiode eine Markierung zu bilden, und
- der erhöhte Schreibleistungspegel imstande ist, während eines zweiten Teils einer Schreibbestrahlungsperiode eine Markierung zu bilden,
- wobei der erhöhte Schreibleistungspegel höher ist als der Schreibleistungspegel, und
- wobei der erhöhte Schreibleistungspegel und die Dauer des zweiten Teils der Schreibbestrahlungsperiode entsprechend einer Zeitlänge einer aufzuzeichnenden Markierung eingestellt werden.

15. Optische Aufzeichnungsanordnung zum Aufzeichnen von Daten in Form von Markierungen und Feldern auf einer Aufzeichnungsfläche eines optischen Aufzeichnungsträgers durch Bestrahlung der Aufzeichnungsfläche mit Hilfe eines Strahlungsbündels, wobei die Anordnung eine Strahlungsquelle aufweist zum Liefern des Strahlungsbündels und Steuermittel zur Steuerung der Leistung des Strahlungsbündels, so dass es wenigstens einen Schreibleistungspegel aufweist, der imstande ist, während einer Schreibleistungsbestrahlungsperiode eine Markierung zu bilden, und dass es wenigstens einen Pegel geringer Leistung hat, der nicht imstande ist, während einer Strahlungsperiode geringer Leistung eine Markierung zu bilden und dass es wenigstens einen Pegel mittlerer Leistung hat, der höher ist als der Pegel geringer Leistung und niedriger ist als der Schreibleistungspegel, wobei Steuermittel wirksam sind um den Strahlungspegel mittlerer Leistung entsprechend einer Zeitlänge der vorhergehenden Strahlungsperiode geringer Leistung einzustellen, **dadurch gekennzeichnet, dass** die Steuermittel wirksam sind zum Steuern der Leistung des Strahlungsbündels nach der Strahlungsperiode mittlerer Leistung, so dass:
- der erhöhte Schreibleistungspegel imstande ist, während eines ersten Teils einer Schreibbestrahlungsperiode eine Markierung zu bilden, und
- der Schreibleistungspegel imstande ist, während eines zweiten Teils einer Schreibbestrahlungsperiode eine Markierung zu bilden,
- wobei der erhöhte Schreibleistungspegel höher ist als der Schreibleistungspegel, und
- wobei der erhöhte Schreibleistungspegel und die Dauer des ersten Teils der Schreibbestrahlungsperiode entsprechend einer Zeitlänge einer aufzuzeichnenden Markierung eingestellt werden.

16. Optische Aufzeichnungsanordnung nach Anspruch 1, wobei die genannten Steuermittel wirksam sind zur Steuerung der Leistung des Strahlungsbündels, so dass dieses wenigstens einen Schreibleistungspegel hat, der imstande ist, während der genannten Schreibleistungsbestrahlungsperiode eine Markierung einer Länge von 2T zu bilden, wobei T die Zeitlänge einer einzigen Periode eines Bezugstaktes in Daten darstellt, und dass die Zeitlänge des genannten dritten Teils der genannten Schreibbestrahlungsperiode Null ist.

17. Optischer Aufzeichnungsträger zur Aufzeichnung von Daten in Form von Markierungen und Feldern durch Bestrahlung der Aufzeichnungsfläche mit Hilfe eines Strahlungsbündels nach einem der Verfahren nach Anspruch 1 bis 13, wobei Parameter mittleren Leistungspegels, Parameter erhöhten Schreibleistungspegels und Parameter, welche die Dauer des erhöhten Schreibleistungspegelteils der Schreibbestrahlungsperiode bezeichnen, auf dem optischen Aufzeichnungsträger aufgezeichnet werden.

## Revendications

1. Procédé d'enregistrement de support d'enregistrement optique pour former des marques et repères en appliquant un faisceau de rayonnement sur une surface d'enregistrement d'un support d'enregistrement optique, les marques ayant une longueur temporelle de nT,
T représentant la longueur temporelle d'une période d'une horloge de référence dans un signal de données et n représentant un nombre naturel préalablement déterminé, dans lequel le faisceau de rayonnement pour chaque marque à enregistrer est d'abord réglé à un niveau de rayonnement de puissance intermédiaire, le niveau de rayonnement de puissance intermédiaire étant supérieur au niveau de rayonnement de puissance inférieure et inférieur au niveau de rayonnement de puissance d'écriture,
le niveau de rayonnement de puissance intermédiaire étant réglé conformément à une longueur temporelle de la période de rayonnement de puissance inférieure précédente, **caractérisé en ce que**
- après la période de rayonnement de puissance intermédiaire, le faisceau de rayonnement pour chaque marque à enregistrer est réglé au niveau de rayonnement de puissance d'écriture pendant des première et troisième parties d'une période de rayonnement d'écriture;
- tandis que le faisceau de rayonnement pour chaque marque à enregistrer est réglé à un niveau de puissance d'écriture élevé pendant une deuxième partie de la période de rayonnement d'écriture,
- le niveau de puissance d'écriture élevé étant supérieur au niveau de puissance d'écriture, et
- tant le niveau de puissance d'écriture élevé que la durée de la deuxième partie de la période de rayonnement d'écriture étant réglés conformément à une longueur temporelle d'une marque à enregistrer.

2. Procédé d'enregistrement de support d'enregistrement optique pour former des marques et repères en appliquant un faisceau de rayonnement sur une surface d'enregistrement d'un support d'enregistrement optique, les marques ayant une longueur temporelle de nT,
T représentant la longueur temporelle d'une période d'une horloge de référence dans un signal de données et n représentant un nombre naturel préalablement déterminé,
dans lequel le faisceau de rayonnement pour chaque marque à enregistrer est d'abord réglé à un niveau de rayonnement de puissance intermédiaire, le niveau de rayonnement de puissance intermédiaire étant supérieur au niveau de rayonnement de puissance inférieure et inférieur au niveau de rayonnement de puissance d'écriture,
le niveau de rayonnement de puissance intermédiaire étant réglé conformément à une longueur temporelle de la période de rayonnement de puissance inférieure précédente, **caractérisé en ce que**
- après la période de rayonnement de puissance intermédiaire, le faisceau de rayonnement pour chaque marque à enregistrer est réglé au niveau de rayonnement de puissance d'écriture élevée pendant une première partie d'une période de rayonnement d'écriture;
- tandis que le faisceau de rayonnement pour chaque marque à enregistrer est réglé à un niveau de puissance d'écriture pendant une deuxième partie de la période de rayonnement d'écriture,
- le niveau de puissance d'écriture élevé étant supérieur au niveau de puissance d'écriture, et
- tant le niveau de puissance d'écriture élevée que la durée de la deuxième partie de la période de rayonnement d'écriture étant réglés conformément à une longueur temporelle de la marque à enregistrer.

3. Procédé d'enregistrement de support d'enregistrement optique selon l'une des revendications 1 ou 2, dans lequel le niveau de puissance d'écriture élevé pour enregistrer une marque possédant une longueur temporelle nT est réglé pour être supérieur au niveau de puissance d'écriture élevé pour l'enregistrement d'une marque possédant une longueur temporelle (n+1)T.

4. Procédé d'enregistrement de support d'enregistrement optique selon l'une des revendications 1 ou 2, n étant égal à 2, dans lequel le niveau de puissance d'écriture élevé est réglé pour être inférieur à 2,0 fois le niveau de puissance d'écriture.

5. Procédé d'enregistrement de support d'enregistrement optique selon l'une des revendications 1 ou 2, n étant égal à 3, dans lequel le niveau de puissance d'écriture élevé est réglé pour être inférieur à 1,7 fois le niveau de puissance d'écriture.

6. Procédé d'enregistrement de support d'enregistrement optique selon l'une des revendications 1 ou 2, n étant égal à 4, dans lequel le niveau de puissance d'écriture élevé est réglé pour être inférieur à 1,5 fois le niveau de puissance d'écriture.

7. Procédé d'enregistrement de support d'enregistrement optique selon l'une des revendications 1 ou 2, n étant supérieur à 4, dans lequel le niveau de puissance d'écriture élevé est réglé pour être inférieur à 1,4 fois le niveau de puissance d'écriture.

8. Procédé d'enregistrement de support d'enregistrement optique selon la revendication 1, dans lequel n représente un nombre naturel préalablement déterminé inférieur à 3 et que la longueur temporelle de ladite troisième partie de ladite période de rayonnement d'écriture est zéro.

9. Procédé d'enregistrement de support d'enregistrement optique selon la revendication 8, dans lequel le niveau de puissance d'écriture élevé est réglé pour être inférieur à 2,0 fois le niveau de puissance d'écriture.

10. Procédé d'enregistrement de support d'enregistrement optique selon l'une des revendications 1 ou 2, dans lequel la durée de la longueur d'une période précédente de rayonnement de puissance inférieure est inférieure à 2T, le niveau de rayonnement de puissance intermédiaire étant réglé pour être inférieur à 0,5 fois le niveau de puissance d'écriture.

11. Procédé d'enregistrement de support d'enregistrement optique selon l'une des revendications 1 ou 2 ou selon la revendication 8, dans lequel la durée de la longueur d'une période précédente de rayonnement de puissance inférieure est inférieure à 3T, le niveau de rayonnement de puissance intermédiaire étant réglé pour se situer dans une gamme de 0,3 à 0,8 fois le niveau de puissance d'écriture.

12. Procédé d'enregistrement de support d'enregistrement optique selon l'une des revendications 1 ou 2 ou selon la revendication 8, dans lequel la durée de la longueur d'une période précédente de rayonnement de puissance inférieure est égale à 4T, le niveau de rayonnement de puissance intermédiaire étant réglé pour se situer dans une gamme de 0,4 à 0,9 fois le niveau de puissance d'écriture.

13. Procédé d'enregistrement de support d'enregistrement optique selon l'une des revendications 1 ou 2 ou selon la revendication 8, dans lequel la durée de la longueur d'une période précédente de rayonnement de puissance inférieure est supérieure à 4T, le niveau de rayonnement de puissance intermédiaire étant réglé pour être supérieur à 0,5 fois le niveau de puissance d'écriture.

14. Dispositif d'enregistrement optique pour enregistrer des données sous la forme de marques et repères sur une surface d'enregistrement d'un support d'enregistrement optique en irradiant la surface d'enregistrement au moyen d'un faisceau de rayonnement, le dispositif comprenant une source de rayonnement pour fournir le faisceau de rayonnement et des moyens de commande pour commander la puissance du faisceau de rayonnement de telle sorte qu'il possède au moins un niveau de puissance d'écriture capable de former une marque pendant une période de rayonnement de puissance d'écriture et qu'il possède au moins un niveau de puissance inférieure incapable de former une marque pendant une période de rayonnement de puissance inférieure et qu'il possède au moins un niveau de puissance intermédiaire supérieure au niveau de puissance inférieure et inférieur au niveau de puissance d'écriture dans lequel les moyens de commande peuvent fonctionner pour régler le niveau de rayonnement de puissance intermédiaire conformément à une longueur temporelle de la période précédente de rayonnement de puissance inférieure, **caractérisé en ce que** les moyens de commande peuvent fonctionner pour commander la puissance du faisceau de rayonnement une fois que la période de rayonnement de puissance intermédiaire est telle qu'elle possède
le niveau de puissance d'écriture capable de former une marque pendant une première et une troisième parties d'une période de rayonnement d'écriture, et
le niveau de puissance d'écriture élevé capable de former une marque pendant une deuxième partie d'une période de rayonnement d'écriture,
le niveau de puissance d'écriture élevé étant supérieur au niveau de puissance d'écriture et
le niveau de puissance d'écriture élevé et la durée de la deuxième partie de la période de rayonnement d'écriture étant réglés conformément à une longueur temporelle d'une marque à enregistrer.

15. Dispositif d'enregistrement optique pour enregistrer des données sous la forme de marques et repères sur une surface d'enregistrement d'un support d'enregistrement optique en irradiant la surface d'enregistrement au moyen d'un faisceau de rayonnement, le dispositif comprenant une source de rayonnement pour fournir le faisceau de rayonnement et des moyens de commande pour commander la puissance du faisceau de rayonnement de telle sorte qu'il possède au moins un niveau de puissance d'écriture capable de former une marque pendant une période de rayonnement de puissance d'écriture et qu'il possède au moins un niveau de puissance inférieure incapable de former une marque pendant une période de rayonnement de puissance inférieure et qu'il possède au moins un niveau de puissance intermédiaire supérieur au niveau de puissance inférieure et inférieur au niveau de puissance d'écriture dans lequel les moyens de commande peuvent fonctionner pour régler le niveau de rayonnement de puissance intermédiaire conformément à une longueur temporelle de la période précédente de rayonnement de puissance inférieure, **caractérisé en ce que** les moyens de commande peuvent fonctionner pour commander la puissance du faisceau de rayonnement une fois que la période de rayonnement de puissance intermédiaire est telle qu'elle possède
le niveau de puissance d'écriture élevé capable de former une marque pendant une première partie d'une période de rayonnement d'écriture, et
le niveau de puissance d'écriture capable de former une marque pendant une deuxième partie d'une période de rayonnement d'écriture,
le niveau de puissance d'écriture élevé étant supérieur au niveau de puissance d'écriture et
le niveau de puissance d'écriture élevé et la durée de la première partie de la période de rayonnement d'écriture étant réglés conformément à une longueur temporelle d'une marque à enregistrer.

16. Dispositif d'enregistrement optique selon la revendication 14 dans lequel lesdits moyens de commande sont destinés à commander la puissance du faisceau de rayonnement de telle sorte qu'ils possèdent au moins un niveau de puissance d'écriture capable de former une marque d'une longueur de 2T pendant ladite période de rayonnement de puissance d'écriture, T représentant la longueur temporelle d'une période d'une horloge de référence dans des données et que la longueur temporelle de ladite troisième partie de ladite période de rayonnement d'écriture est zéro.

17. Support d'enregistrement optique pour enregistrer des données sous la forme de marques et repères en irradiant sa surface d'enregistrement au moyen d'un faisceau de rayonnement selon l'un des procédés conforme aux revendications 1 à 3, dans lequel les paramètres du niveau de puissance intermédiaire, les paramètres du niveau de puissance d'écriture élevé et les paramètres désignant la durée de la partie de niveau de puissance d'écriture élevé de la période de rayonnement d'écriture sont enregistrés sur le support d'enregistrement optique.
